Europäisches Patentamt

European Patent Office

Office européen des brevets

(19)

(11) EP 1 213 139 A2

(12) EUROPEAN PATENT APPLICATION

(43) Date of publication:
12.06.2002 Bulletin 2002/24

(51) Int Cl.⁷: B32B 27/36, B29C 55/02

(21) Application number: 01204457.4

(22) Date of filing: 22.11.2001

(84) Designated Contracting States:
AT BE CH CY DE DK ES FI FR GB GR IE IT LI LU
MC NL PT SE TR
Designated Extension States:
AL LT LV MK RO SI

(30) Priority: 06.12.2000 US 731382

(71) Applicant: EASTMAN KODAK COMPANY
Rochester, New York 14650 (US)

(72) Inventors:
• Greener, Jehuda, c/o Eastman Kodak Company
Rochester, New York 14650-2201 (US)

• Laney, Thomas M., c/o Eastman Kodak Company
Rochester, New York 14650-2201 (US)
• Kelley, Fred Douglas,
c/o Eastman Kodak Company
Rochester, New York 14650-2201 (US)

(74) Representative: Parent, Yves et al
KODAK INDUSTRIE
Département Brevets - CRT
Zone Industrielle
B.P. 21
71102 Chalon-sur-Saône Cédex (FR)

(54) **Sublimate elimination in dyed polyester films by use of barrier layers**

(57) A dyed polyester film comprising a B/A/B' type laminate structure wherein B and B' are clear polyester layers not containing a dye additive or a sublimate forming material and having a thickness $L_B$ and $L_{B'}$, and a glass transition $Tg_B$ and $Tg_{B'}$; A is a dyed polyester layer containing a dye additive and having a thickness $L_A$ and a glass transition temperature $Tg_A$; wherein the polyester in B, B' and A is poly(ethylene terephthalate), poly (ethylene naphthalate), polyesters containing sulfonate groups, copolymers of poly(ethylene terephthalate), poly(ethylene naphthalate), or copolymers of poly(ethylene terephthalate) and poly(cyclohexane dimethylene terephthalate). A method of producing the dyed polyester film is also disclosed.

## Description

This invention relates to a general method for preparing a dyed polyester film in a manner that prevents sublimate formation from the dye additive during the film manufacturing process.

The standard process for making a dyed polyester film (such as a poly(ethylene terephthalate) (PET) film)consists of melt extruding a blend of polyester resin with a suitable dye additive followed by the general steps of casting, drafting, tentering, heatsetting and winding, all of which are well known in the art. When the blend is heated to above the glass transition temperature of the polyester component during the film manufacturing process, the dye species diffuse to the surfaces of the film and form a highly concentrated layer. The dye then sublimates from the film surfaces and eventually condenses on various machine surfaces. The condensate thus formed contaminates certain parts of the machine, which necessitates periodic cleaning and maintenance. This disrupts the manufacturing operation and is a major source of production waste. What is needed in the art is a method of eliminating dye sublimation.

The present invention discloses a method for preparing a dyed polyester film in a manner that prevents sublimate formation from the dye additive during the film manufacturing process. The process involves adding barrier layers on one or both surfaces of the film, using the coextrusion method.

The coextrusion process is used to prepare a laminated film of the B/A/B', B/A/B, or the B/A type. A is a dyed polyester core layer and B and B' are non-dyed or clear polyester surface layers which serve as barrier layers for the diffusing dye species in layer A. Layers B and B' need not have the same composition or thickness and these layers can comprise the same or different polyesters that are coextrudable and costretchable with the polyester of layer A . If the final thickness of the surface layers is greater than 1 $\mu$m the diffusion of dye to the surfaces of the film under common operating conditions can be substantially retarded, thus eliminating the possibility of dye sublimation and machine contamination.

Hence the present invention discloses a dyed polyester film comprising a B/A/B' type laminate structure wherein B and B' are clear polyester layers not containing a dye additive or a sublimate forming material and having a thickness $L_B$ and $L_{B'}$ and a glass transition $Tg_B$ and $Tg_{B'}$; respectively, A is a dyed polyester layer containing a dye additive and having a thickness $L_A$ and a glass transition temperature $Tg_A$; wherein the polyester in B, B' and A is poly(ethylene terephthalate), poly (ethylene naphthalate), polyesters containing sulfonate groups, copolymers of poly(ethylene terephthalate), poly(ethylene naphthalate), or copolymers of poly(ethylene terephthalate) and poly(cyclohexane dimethylene terephthalate).

Another embodiment discloses a dyed polyester film comprising a B/A type laminate structure wherein B is a clear polyester layer not containing a dye additive or a sublimate forming material and having a thickness $L_B$ and a glass transition $Tg_B$. A is a dyed polyester layer containing a dye additive and having a thickness $L_A$ and a glass transition temperature $Tg_A$; wherein the polyester in B, B' and A is poly(ethylene terephthalate), poly (ethylene naphthalate), polyesters containing sulfonate groups, copolymers of poly(ethylene terephthalate), poly(ethylene naphthalate), or copolymers of poly(ethylene terephthalate) and poly(cyclohexane dimethylene terephthalate).

The present invention also discloses a method for preparing a dyed polyester film comprising the steps of:

(a) coextruding a B/A/B' type laminate structure using at least two extruders and a coextrusion die, wherein B and B' are clear, non-dyed polyester surface layers having thicknesses $L_B$ and $L_{B'}$ and glass transition temperatures $Tg_B$, and $Tg_{B'}$, respectively, and A is a dyed polyester core layer having a thickness $L_A$ and a glass transition temperature $Tg_A$; wherein the polyesters in the surface and core layers are selected from the list comprising poly(ethylene terephthalate), poly(ethylene naphthalate), polyesters containing sulfonate groups, copolymers of poly(ethylene terephthalate) and poly(ethylene naphthalate), and copolymers of poly(ethylene terephthalate), and poly(cyclohexane dimethylene terephthalate);
(b) casting the laminate structure on a casting wheel at temperatures ranging from $Tg_{B'}$ - 50°C to $Tg_{B'}$; where layer B' is the layer facing the casting wheel;
(c) stretching the laminate structure along the machine (longitudinal) direction by ratios of 2.5 to 4.5 at temperatures ranging from $Tg_A$ to $Tg_A$ + 30°C;
(d) stretching the laminate structure along the machine transverse direction by ratios of 2.5 to 4.5 at temperatures ranging from $Tg_A$ to $Tg_A$ + 30°C; and
(e) heat setting the laminate structure at temperatures ranging from 150 to 250°C.

The thickness of layer B and of layer B' is between 0.1 and 100 $\mu$m, and preferably between 5 and 10 $\mu$m. The thickness of the dyed polyester layer A is between 10 and 300 $\mu$m., preferably between 50 and 200 $\mu$m.

The two clear surface layers may comprise the same or different polyester and may also have the same or different thickness.

The use of coextrusion technology for producing a laminated film structure is well known in the art. For example, U.S. Patent No. 5,034,263 teaches a particular laminate structure to improve the cutting and finishing response of polyester films. U.S. Patent Nos. 5,387,501, 5,556,739, 5,472,831 and 5,288,601 disclose a surface layer(s) containing sulfonate groups designed to control humidity curl and core-set curl of photographic films. U.S. Patent Nos. 4,011,358, 4,868,051, 4,883,706, 5,073,435, 5,164,248, and 5,567,576, teach a method of improving adhesion of a polyester film by having amorphous (non-crystalline) layers on the surface(s) of the film. In U.S. Patent No. 5,759,756, a coextrusion method is used to produce a laminate with a lower-cost PEN film.

The proposed invention discloses a method for eliminating sublimation from the surface of a polyester film. The method involves coextrusion of a tri-layered or bi-layered laminate of the B/A/B', B/A/B, or B/A types using two (or more) extruders which feed two (or more) melt streams into a specially designed manifold die. The composition of layers A, B and B' can be identical with the exception that the core layer (A) comprises a polyester mixed with a dye to render the final stretched film a certain desired hue or color while the surface layers B and B' are non-dyed.

Examples of colored polyester films are film supports used for making X-ray film or film supports used for making certain types of graphic arts films. The thickness of the clear surface layers must be sufficient to prevent the dye species in the inner layer from diffusing to the surface of the film during the various high temperature steps of the film manufacturing process. The laminated sheet issuing from the die is converted into a biaxially stretched film following the general film-making process well known in the art.

The extrudate is first cast on a wheel at temperatures ranging from the glass transition of the outer layer ($Tg_B$ or $Tg_{B'}$) down to ($Tg_B$ or $Tg_{B'}$) - 50°C. The cast sheet is first stretched along the machine direction by ratios of 2.5 to 4.5 and at temperatures ranging from the glass transition of the core layer $Tg_A$ up to $Tg_A$ + 30°C. Subsequently, the film is stretched in the transverse direction by ratios of 2.5 to 4.5 and at temperatures ranging from $Tg_A$ to $Tg_A$ + 30°C. If the glass transition temperature of any of the surface layers is higher than $Tg_A$ then the stretching steps must be conducted at a temperature greater than the highest glass transition temperature of any of the layers. However, the glass transition temperature of any of the surface layers cannot exceed $Tg_A$ + 30°C to assure that the laminate is stretchable. The biaxially-stretched laminate is finally heat-set at temperatures ranging from 150 to 250°C and wound up on a roll.

The diffusion distance of the dye molecules can be estimated from the formula:

$$L_D = \sqrt{D \cdot t} \qquad (1)$$

Where $t$ is the residence time of the film in a particular high temperature step of the process and $D$ is the diffusion coefficient of the dye species at the temperature applied in said step. The thickness of any of the surface layers must be equal to or exceed $L_D$ in order to prevent the dye species from diffusing to the surface of the laminate.

**EXAMPLE:**

A laminate with a B/A/B structure is prepared by coextrusion - a process well known in the art. Resin A comprises a blend of PET resin (0.62 IV) mixed with a blue dye, Ceres Blue XR-RF® (supplied by Bayer Corp., 100 Bayer Rd. Pittsburgh, PA 15202-9741), having a molecular weight of 474.7 g/mol, at a concentration of 200 ppm. Resin B is the same as the PET resin used in Layer A but without the added dye. The dye-resin mixture is prepared by adding a dye concentrate at the hopper of the plasticating extruder used in the film manufacturing process. Both resins have a glass transition temperature of 76°C as measured by differential scanning calorimetry. The two melt streams, corresponding to Layers A and B, are extruded at a temperature of 280°C. The coextrusion die is adjusted such that the laminate issuing from the die has a total thickness of 2 mm and the surface layers (B) have a thickness of 50 µm each. The laminate is cast on a wheel at a temperature of 50°C followed by sequential biaxial stretching. The film is first stretched along the machine direction by a ratio of 3.3 at a temperature of 95°C followed by a stretch along the transverse direction by a ratio of 3.1 at a temperature of 100°C. The stretched film is finally heatset at a temperature of 210°C and wound on a roll. The diffusion coefficient of the dye at high temperatures can be estimated based on a general procedure and data given in the literature (See, J. S. Vrentas, H. T. Liu and J. L. Duda, *J. of Applied Polymer Science,* Vol. **25**, 1297 (1980), 2. R. M. Stinson and S. K. Obendorf, *J. of Applied Polymer Science,* Vol. **62**, 2121 (1996)). At temperatures of 220 - 280°C the diffusion coefficient of the dye in PET is estimated at < $1 \times 10^{-7}$ $cm^2$/s. For a residence time of 1 second between the die and the casting wheel the diffusion length based on formula (1) is approximately 3 µm, less than the thickness of the barrier layer (50 µm). In the heatset section of the machine the thickness of the barrier layer is reduced to approximately 4.9 µm. For a residence time of 6 sec in this section the diffusion length is 4.5 µm, again, less than the thickness of the barrier layer (4.9 µm). With the given barrier layers no sublimate can be formed during the film manufacturing process.

**Claims**

1. A method for preparing a dyed polyester film comprising the steps of:

   (a) coextruding a B/A/B' type laminate structure using at least two extruders and a coextrusion die, wherein B and B' are clear, non-dyed polyester surface layers having thicknesses $L_B$ and $L_{B'}$ and glass transition temperatures $Tg_B$,

and $Tg_{B'}$, respectively, and A is a dyed polyester core layer having a thickness $L_A$ and a glass transition temperature $Tg_A$; wherein the polyesters in the surface and core layers are selected from the list comprising poly(ethylene terephthalate), poly(ethylene naphthalate), polyesters containing sulfonate groups, copolymers of poly(ethylene terephthalate) and poly(ethylene naphthalate), and copolymers of poly(ethylene terephthalate), and poly(cyclohexane dimethylene terephthalate);

(b) casting the laminate structure on a casting wheel at temperatures ranging from $Tg_{B'}$ - 50°C to $Tg_{B'}$; where layer B' is the layer facing the casting wheel;

(c) stretching the laminate structure along the machine direction by ratios of 2.5 to 4.5 at temperatures ranging from $Tg_A$ to $Tg_A$ + 30°C;

(d) stretching the laminate structure along the transverse direction by ratios of 2.5 to 4.5 at temperatures ranging from $Tg_A$ to $Tg_A$ + 30°C; and

(e) heat setting the laminate structure at temperatures ranging from 150 to 250°C.

2. The method of claim 1 wherein the thickness of the dyed polyester film is between 50 and 300 μm.

3. The method of claim 1 wherein the thickness of layer B and of layer B' is between 0.1 and 100 μm.

4. A method for preparing a dyed polyester film comprising the steps of:

(a) coextruding a B/A type laminate structure using two extruders and a coextrusion die, wherein B is a clear, non-dyed polyester surface layer having a thickness $L_B$ and a glass transition temperature $Tg_B$, and A is a dyed polyester core layer having a thickness $L_A$ and a glass transition temperature $Tg_A$; wherein the polyester in the surface and core layers are selected from the list comprising poly(ethylene terephthalate), poly(ethylene naphthalate), polyesters containing sulfonate groups, copolymers of poly(ethylene terephthalate) and poly(ethylene naphthalate), and copolymers of poly(ethylene terephthalate) and poly(cyclohexane dimethylene terephthalate);

(b) casting the laminate structure on a casting wheel at temperatures ranging from $Tg_A$ - 50°C to $Tg_A$; where layer A is the layer facing the casting wheel;

(c) stretching the laminate structure along the machine direction by ratios of 2.5 to 4.5 at temperatures ranging from $Tg_A$ to $Tg_A$ + 30°C;

(d) stretching the laminated film along the transverse direction by ratios of 2.5 to 4.5 at temperatures ranging from $Tg_A$ to $Tg_A$ + 30°C; and

(e) heat setting the laminated film at temperatures ranging from 150 to 250°C.

5. The method of claim 4 wherein the thickness of the dyed polyester film is between 50 and 300 μm.

6. The method of claim 4 wherein the thickness of layer B is between 0.1 and 100 μm.

7. The method of claim 4 wherein the thickness of the dyed polyester layer A is between 50 and 300 μm.

8. A dyed polyester film comprising a B/A/B' type laminate structure wherein B and B' are clear polyester layers not containing a dye additive or a sublimate forming material and having a thickness $L_B$ and $L_{B'}$ and a glass transition $Tg_B$ and $Tg_{B'}$, A is a dyed polyester layer containing a dye additive and having a thickness $L_A$ and a glass transition temperature $Tg_A$; wherein the polyester in B, B' and A is poly(ethylene terephthalate), poly(ethylene naphthalate), polyesters containing sulfonate groups, copolymers of poly(ethylene terephthalate), poly(ethylene naphthalate), or copolymers of poly(ethylene terephthalate) and poly(cyclohexane dimethylene terephthalate).

9. A dyed polyester film comprising a B/A type laminate structure wherein B is a clear polyester layer not containing a dye additive or a sublimate forming material and having a thickness $L_B$ and a glass transition $Tg_B$; A is a dyed polyester layer containing a dye additive and having a thickness $L_A$ and a glass transition temperature $Tg_A$; wherein the polyester in B, B' and A is poly(ethylene terephthalate), poly(ethylene naphthalate), polyesters containing sulfonate groups, copolymers of poly(ethylene terephthalate), poly(ethylene naphthalate), or copolymers of poly(ethylene terephthalate) and poly(cyclohexane dimethylene terephthalate).

10. The dyed polyester film of claim 8 wherein the thickness of layer B and of layer B' is between 0.1 and 100 μm.